# EUROPEAN PATENT APPLICATION

(11) **EP 2 530 976 A1**
(43) Date of publication of application: **05.12.2012**
(21) Application number: 12170082.7
(22) Date of filing: 30.05.2012
(51) Int. Cl.: H04W 40/02

(54) **Portable network connection device, method of setting portable network connection device, and computer program product**

(30) Priority: 31.05.2011 JP 2011121233
(71) Applicant: Buffalo Inc., Nagoya-shi, Aichi 460-8315 (JP)
(72) Inventor: Yamada, Daisuke, Nagoya-shi, Aichi 460-8315 (JP)
(74) Representative: Taylor, Adam David

(57) **Abstract**

A portable network connection device (20;20a) that functions as a bridge in a first operation mode and as a router in a second operation mode. The portable network connection device is configured to receive a notice packet indicating a presence of a router, and to set an operation mode of the portable network connection device to the first operation mode or the second operation mode based on the whether a notice packet is received.

## Description

### BACKGROUND

### Technical Field

This disclosure relates to relaying packets in a communication network.

### Related Art

A wireless LAN access point (hereinafter also called "access point") is widely used to connect a wireless LAN client (hereinafter also called "client" or "station"), such as personal computer or game machine, to a network in homes and offices. Connecting the access point with a router enables the client to access the Internet via the access point and the router. The router may be provided, for example, as a home gateway by an ISP (Internet Service Provider). Alternatively a wireless LAN router having both the router functions and the access point functions may be employed.

Portable and transportable devices have been proposed for the access point. One of such devices is a portable network connection device having a function module of making wireless communication via a mobile communication network, such as 3G/HSPA (High Speed Packet Access) line, in addition to the functions of the access point. The portable network connection device allows the user even outside the home to connect the user's personal computer to the Internet. More specifically, the user may cause the personal computer to serve as a client and the portable network connection device to serve as an access point and thereby allow data transmission from the personal computer to the portable network connection device. Furthermore, the user may cause the portable network connection device to serve as the router, which then transmits the data received from the personal computer to the Internet via the mobile communication network.

The user may bring the portable network connection device back home and reconnect the portable network connection device to the home network. In this application, when a home gateway has already been provided in the home network, there are two routers (devices having the router functions) simultaneously present in the same home network. In this case, the user is required to manually set which of the routers is to be used as the gateway for the client in the home network. Any erroneous manual setting may lead to failed data transmission.

### SUMMARY

According to a first aspect of the present invention, there is provided a portable network connection device that functions as a bridge in a first operation mode and as a router in a second operation mode. The portable network connection device is configured to receive a notice packet indicating a presence of a router, and to set an operation mode of the portable network connection device to the first operation mode or the second operation mode based on the whether a notice packet is received.

According to a second aspect of the present invention, there is provided a method performed by a portable network connection device that functions as a bridge in a first operation mode and as a router in a second operation mode. The method includes determining whether a notice packet indicating a presence of a router has been received, and setting an operation mode of the portable network connection device to the first operation mode or the second operation mode based on the determination.

According to third aspect of the present invention, there is provided a non-transitory computer-readable medium including computer program instructions, which when executed by a portable network connection device that functions as a bridge in a first operation mode and as a router in a second operation mode, causes the portable network connection device to perform a method including determining whether a notice packet indicating a presence of a router has been received, and setting an operation mode of the portable network connection device to the first operation mode or the second operation mode based on the determination.

### BRIEF DESCRIPTION OF THE DRAWINGS

Fig. 1 illustrates the schematic configuration of a network system 10 including a portable network connection device 20 according to one embodiment of the disclosure;
Fig. 2 illustrates a second connection configuration of the network system 10;
Fig. 3 illustrates a third connection configuration of the network system 10;
Fig. 4 illustrates the detailed structure of the portable network connection device 20;
Fig. 5 illustrates the detailed structure of the router 500;
Fig. 6 is a flowchart showing the procedure of operation mode changeover process performed in the portable network connection device 20 according to the first embodiment;
Fig. 7 illustrates the detailed structure of a portable network connection device 20a according to a second embodiment;
Fig. 8 illustrates the detailed structure of a router 500a according to the second embodiment;
Fig. 9 is a flowchart showing the procedure of operation mode changeover process according to the second embodiment;
Fig. 10 illustrates the detailed structure of a router 500b according to a third embodiment;
Fig. 11 is a flowchart showing the procedure of operation mode changeover process according to the third embodiment;
Fig. 12 illustrates the detailed structure of a router 500c according to a fourth embodiment; and
Fig. 13 is a flowchart showing the procedure of operation mode changeover process according to the fourth embodiment.

### DESCRIPTION OF EMBODIMENTS

### A. First Embodiment

### A1. System Configuration

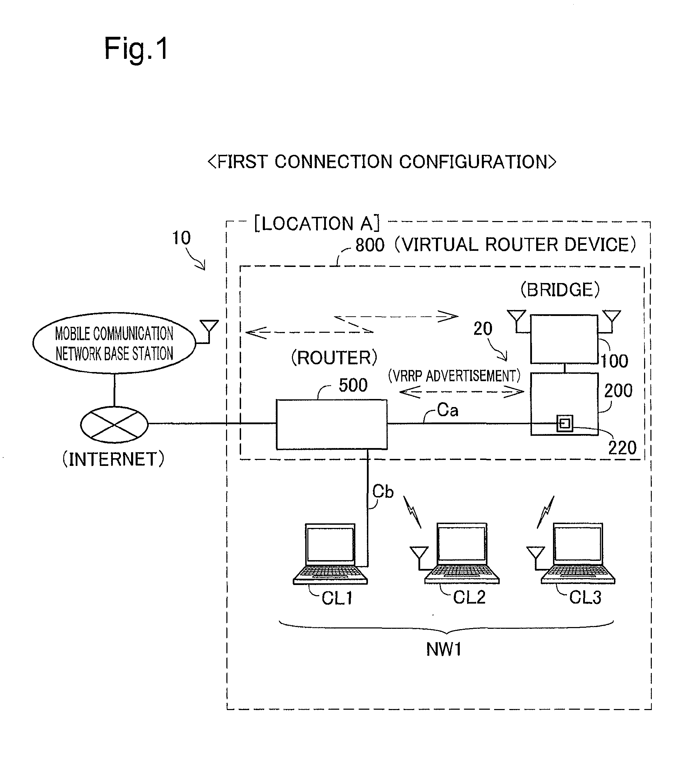

Fig. 1 illustrates the schematic configuration of a network system 10 including a portable network connection device 20 according to one embodiment of the disclosure. The network system 10 includes a router 500, the portable network connection device 20, a first client CL1, a second client CL2 and a third client CL3. The network system 10 serves to forward packets (layer 3 packets and layer 2 frames) sent from any of the clients included in the network system 10 (in the illustrated example of Fig. 1, the three clients CL1, CL2 and CL3) and to forward packets for any of these clients to the corresponding client. The number of clients is not limited to three but may be one or any greater number.

The router 500 is a stationary device configured to relay packets on layer 3 (third layer of OSI reference model) and is connected with the Internet. The router 500 is connected with the portable network connection device 20 by a network cable Ca. The router 500 is also connected with the first client CL1 by a network cable Cb. The router 500 may be provided, for example, as a home gateway by an ISP (Internet Service Provider). The detailed structure of the router 500 will be described later.

The portable network connection device 20 includes a main unit 100 and a cradle 200. The cradle 200 has a port 220, which is used to connect the cradle 200 to a wired LAN and is linked with the network cable Ca in the configuration of Fig. 1.

The main unit 100 is a small, lightweight portable device serving to relay packets (frames) on layer 3 or layer 2. The main unit 100 is removably attachable to the cradle 200 and is attached to the cradle 200 in the configuration of Fig. 1. The main unit 100 has two operation modes for packet forwarding process. More specifically, the main unit 100 has a first operation mode for relaying packets on layer 2 (i.e., operation mode working as the bridge device) and a second operation mode for relaying packets on layer 3 (i.e., operation mode working as the router device). In the illustrated state of Fig. 1, the main unit 100 works in the first operation mode. The detailed structure of the portable network connection device 20 will be described later.

According to this embodiment, the three clients CL1, CL2 and CL3 are all personal computers. The first client CL1 has a wired LAN interface and is connected with the router 500 via the wired LAN interface and the network cable Cb. The second client CL2 has a wireless LAN interface and is connected with the router 500 via the wireless LAN interface. The third client CL3 also has a wireless LAN interface and is connected with the portable network connection device 20 via the wireless LAN interface. In the configuration of Fig. 1, the router 500 serves as a first access point of wireless LAN, and the second client CL2 serves as a client for the first access point. The network connection device 20 serves as a second access point of wireless LAN, and the third client CL3 serves as a client for the second access point. When both the router 500 and the portable network connection device 20 serve as wireless access points in one identical wireless LAN, different BSSIDs (Basic Service Set Identifiers) are assigned to the router 500 and the portable network connection device 20.

The network system 10 allows a plurality of connection configurations among its constituents. Fig. 1 shows a first connection configuration of the network system 10. In the first connection configuration, all the constituents are provided at one identical location A (e.g., house or office). In the first connection configuration, one network NW1 is formed in the downstream of the router 500 (i.e., on the side farther away from the Internet). Private IP (Internet Protocol) addresses are assigned to the network NW1. A global IP address is assigned to a connection interface of the router 500 used for connecting with the Internet. The router 500 has address conversion function for converting between the global IP address and the private IP address, for example, NAT (Network Address Translation) function or NAPT (Network Address Port Translation) function.

The router 500 and the portable network connection device 20 are both compatible with VRRP (Virtual Router Redundancy Protocol) or redundancy protocol for the router device specified by RFC (Request For Comment) 3768 or RFC 3768 and 5798, and have various data set in advance for VRRP. In the first connection configuration, the router 500 and the portable network connection device 20 form a virtual router device 800. More specifically, a virtually identical MAC (Media Access Control) address and a virtually identical IP address are assigned to the router 500 and the portable network connection device 20 (main unit 100), so that these two devices constitute one virtual router device. The virtual router device 800 is formed to ensure the redundancy of the router functions in the network system 10. In the event of some failure arising in the router 500, the portable network connection device 20 (main unit 100) promptly serves as the router, so as to shorten the period of time with absence of the device having the router functions in the network system 10. A mobile communication network base station shown in Fig. 1 works as relay equipment to connect the portable network connection device 20 to the Internet, when the portable network connection device 20 serves as the router. In the connection configuration of Fig. 1, however, the portable network connection device 20 is a backup router and does not establish wireless communication with an access point (a base station).

Each of the router 500 and the portable network connection device 20 (main unit 100) sends a packet for a VRRP advertisement message to a predetermined multicast address in conformity to the VRRP protocol. In the first connection configuration, each of the router 500 and the portable network connection device 20 receives the packet for the VRRP advertisement message output from the other. The VRRP advertisement message includes a VRID (Virtual Router ID) set in the source device, the priority, an advertising interval (output interval of the VRRP advertisement message) and the virtual IP address and the virtual MAC address assigned to the virtual router device. The VRRP advertisement message is accordingly used to publicize these set data, as well as the presence of the device operable as the virtual router device.

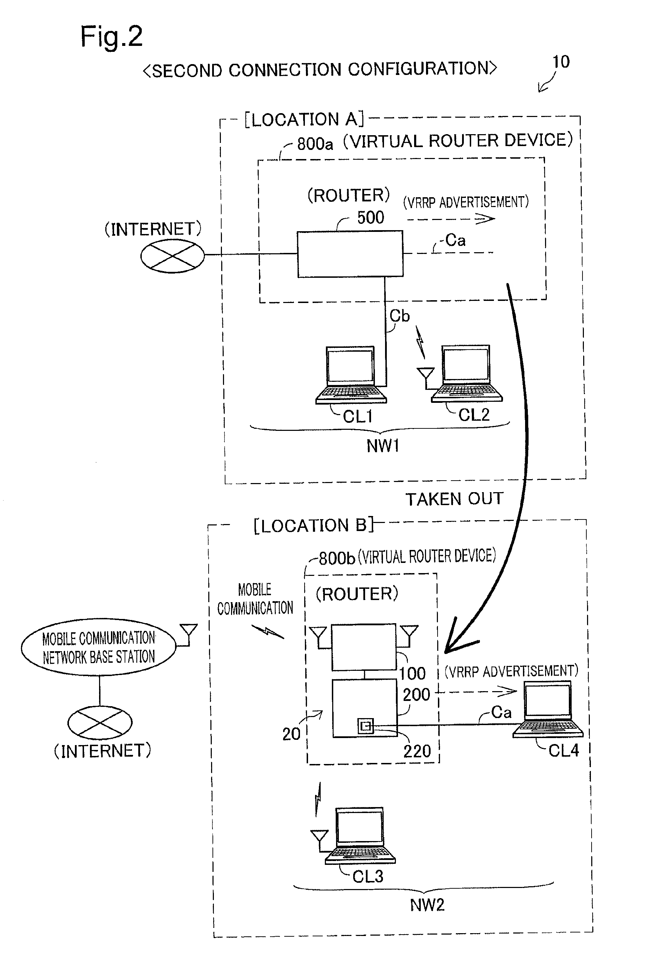

Fig. 2 illustrates a second connection configuration of the network system 10. In the second network configuration, all the constituents are not provided at one identical location. More specifically, the router 500, the first client CL1, the second client CL2 and the network cable Cb are provided at a location A shown in the upper half of Fig. 2. The main unit 100, the cradle 200, the third client CL3, a fourth client CL4 and the network cable Ca are provided at a location B shown in the lower half of Fig. 2. In the second connection configuration of the first embodiment, the location A and the location B are significantly remote from each other, such that communication between a wireless LAN access point at one location, e.g., location A and a wireless LAN client at the other location, e.g., location B is not allowed.

The fourth client CL4 is a personal computer like the other clients CL1 to CL3 and has a wired LAN interface. The fourth client CL4 is connected with the main unit 100 via the wired LAN interface, the network cable Ca and the cradle 200.

The main unit 100 has a mobile communication interface and establishes wireless communication with a mobile communication network base station via the mobile communication interface.

In the second connection configuration, the location A has the similar configuration to the first connection configuration shown in Fig. 1, except the main unit 100, the cradle 200 and the third client CL3 are taken out of the location A. More specifically, the first client CL1 is connected with the router 500 by the network cable Cb, and the second client CL2 is connected with the router 500 by wireless, so that both the clients CL1 and CL2 can make communication via the Internet through the router 500.

In the second connection configuration, the portable network connection device 20 (main unit 100) serves as the router device at the location B. More specifically, the portable network connection device 20 (main unit 100) serves to relay an IP packet output from either the third client CL3 or the fourth client CL4 to a mobile communication network and to relay an IP packet addressed to the third client CL3 or the fourth client CL4 received from the mobile communication network to the third client CL3 or the fourth client CL4.

The first connection configuration of Fig. 1 at the location A may be changed to the second connection configuration of Fig. 2, for example, when the user detaches the network cable Ca from the router 500, takes out the main unit 100, the cradle 200 and the third client CL3 to the location B, and connects the new client CL4 with the network cable Ca at the location B. The user may take out the main unit 100 and the other constituents from the location A, for example, when the user intends to construct a new network at the location B and allow a client having only a wired LAN interface (e.g., fourth client CL4) to join the new network. As shown in Fig. 2, a new network NW2 is formed at the location B.

In the second connection configuration, a virtual router device 800a is formed by the single router 500 at the location A, whereas a virtual router device 800b is formed by the single portable network connection device 20 at the location B. The virtual router devices are provided at both the locations A and B, since the router 500 and the portable network connection device 20 are incapable of receiving the packet for the VRRP advertisement message output from the other in the second connection configuration.

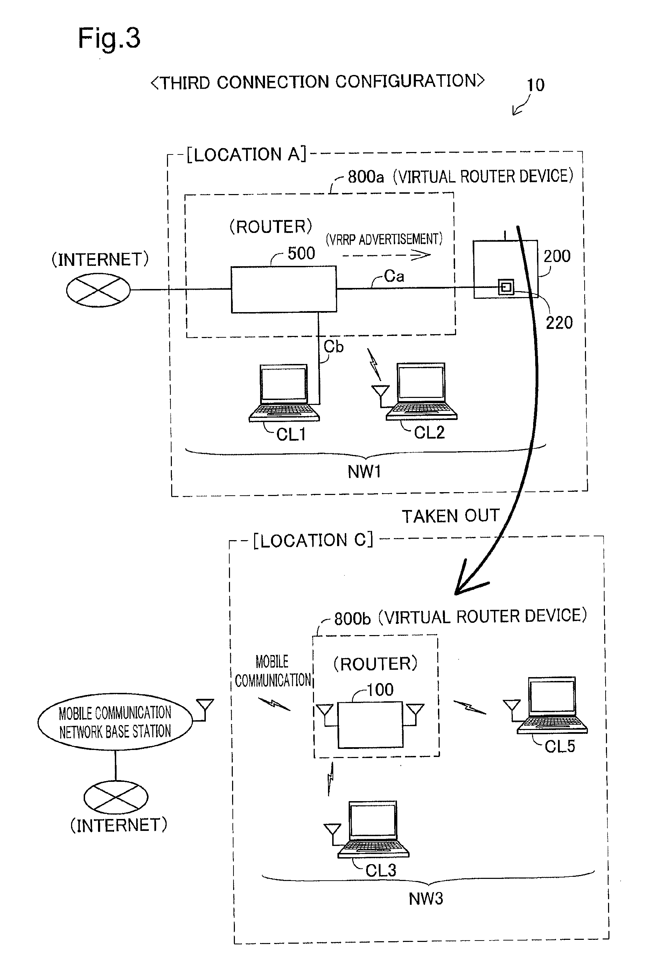

Fig. 3 illustrates a third connection configuration of the network system 10. In the third network configuration, all the constituents are not provided at one identical location. More specifically, the router 500, the cradle 200, the first client CL1, the second client CL2, the network cable Ca and the network cable Cb are provided at a location A shown in the upper half of Fig. 3. The main unit 100, the third client CL3 and a fifth client CL5 are provided at a location C shown in the lower half of Fig. 3. In the third connection configuration, the location A and the location C are significantly remote from each other, such that communication between a wireless LAN access point at one location, e.g., location A and a wireless LAN client at the other location, e.g., location C is not allowed.

The fifth client CL5 is a personal computer like the other clients CL1 to CL4 and has a wireless LAN interface. The fifth client CL5 is connected with the main unit 100 via the wireless LAN interface.

In the third connection configuration, the location A has the similar configuration to the first connection configuration shown in Fig. 1, except the main unit 100 and the third client CL3 are taken out of the location A. More specifically, the first client CL1 is connected with the router 500 by the network cable Cb, and the second client CL2 is connected with the router 500 by wireless, so that both the clients CL1 and CL2 can make communication via the Internet through the router 500.

In the third connection configuration, the main unit 100 serves as the router device at the location C. More specifically, the main unit 100 serves to relay an IP packet output from either the third client CL3 or the fifth client CL5 to a mobile communication network and to relay an IP packet addressed to the third client CL3 or the fifth client CL5 received from the mobile communication network to the third client CL3 or the fifth client CL5.

The first connection configuration of Fig. 1 at the location A may be changed to the third connection configuration of Fig. 3, for example, when the user separates the main unit 100 from the cradle 200, takes out the main unit 100 and the third client CL3 to the location C, and connects the new client CL5 with the main unit 100 serving as the wireless LAN access point by wireless communication at the location C. The user may take out the main unit 100 and the third client CL3 from the location A, for example, when the user with the third client CL3 intends to move to the location C with continuing communication of the third client CL3 via the Internet. As shown in Fig. 3, a new network NW3 is formed at the location C.

In the third connection configuration, a virtual router device 800a is formed by the single router 500 at the location A as in the second connection configuration, whereas a virtual router device 800b is formed by the single main unit 100 at the location C.

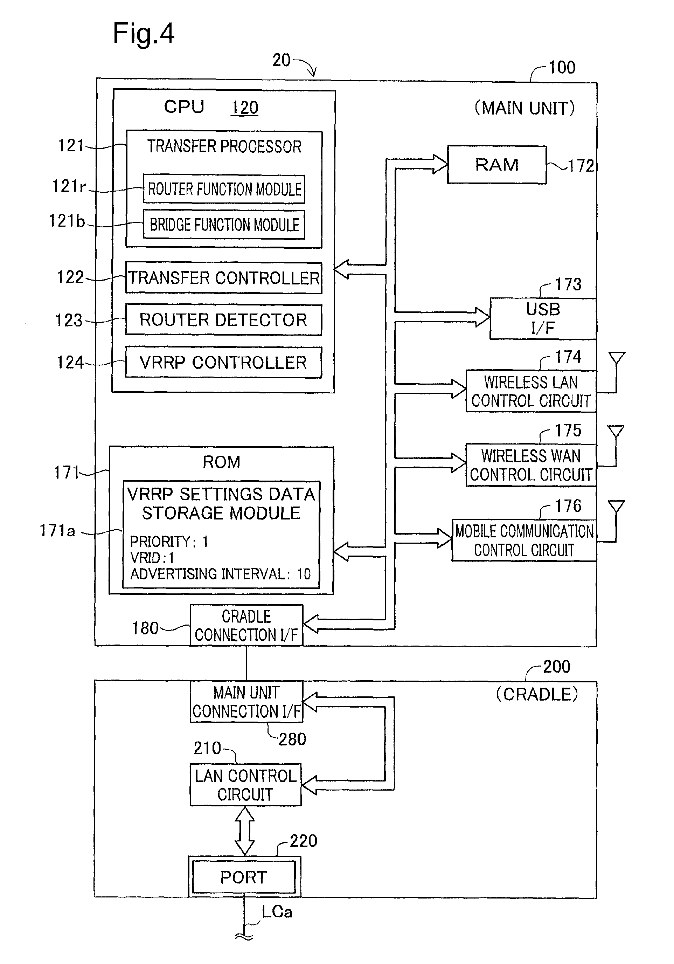

Fig. 4 illustrates the detailed structure of the portable network connection device 20. The cradle 200 includes a main unit connection interface (I/F) 280 and a LAN control circuit 210, in addition to the port 220 described above. The port 220 and the LAN control circuit 210 are interconnected by an internal bus. Similarly, the LAN control circuit 210 and the main unit connection interface 280 are interconnected by an internal bus. The port 220 may be, for example, a port conforming to the IEEE802.3/3u/3ab standard. The LAN control circuit 210 controls data transmission via the port 220 according to a predetermined network protocol (for example, Ethernet (registered trademark)).

The main unit connection interface 280 of the cradle 200 has the functions of a USB (Universal Serial Bus) controller and serves to transmit information to and from the main unit 100 and supply electric power to the main unit 100 according to the USB standards when the cradle 200 is connected with the main unit 100.

The main unit 100 includes a USB interface 173, a wireless LAN control circuit 174, a wireless WAN control circuit 175, a mobile communication control circuit 176, a cradle connection interface (I/F) 180 for connecting with the cradle 200, a CPU (Central Processing Unit) 120, a ROM (Read Only Memory) 171 and a RAM (Random Access Memory) 172. The USB interface 173 is used for connecting with a USB (Universal Serial Bus) device (e.g., storage device).

The wireless LAN control circuit (also called "wireless LAN interface") 174 includes a modulator, an amplifier and an antenna and serves as a wireless LAN access point conforming to, for example, the IEEE802.11b/g/n standard to establish wireless communication with a wireless LAN client (e.g., personal computer or game machine). The wireless WAN control circuit (also called "wireless WAN interface") 175 includes a modulator, an amplifier and an antenna and serves as a wireless LAN client conforming to, for example, the IEEE802.11a/b/g/n standard to establish wireless communication with a wireless LAN access point (e.g., public wireless LAN access point). The mobile communication control circuit (also called "mobile communication interface") 176 includes a modulator, an amplifier and an antenna and serves as a mobile communication terminal conforming to, for example, the 3G/HSPA protocol to establish wireless communication with a mobile communication base station. As described, the main unit 100 of the first embodiment has a plurality of wireless communication interfaces for making wireless communication in different wireless communication networks.

The cradle connection interface 180 of the main unit 100 has the functions of a USB device controller and serves to transmit information to and from the cradle 200 according to the USB standards when the main unit 100 is connected with the cradle 200. The cradle connection interface 180 also serves to feed the electric power supplied from the cradle 200 via the main unit connection interface 280 to a battery provided in the main unit 100 when the main unit 100 is connected with the cradle 200.

The CPU 120 loads and executes computer programs stored in the ROM 171 onto the RAM 172, so as to control the respective components of the portable network connection device 20 and to serve as a transfer processor 121, a transfer controller 122, a router detector 123, and a VRRP controller 124.

The transfer processor 121 has a router function module 121r and a bridge function module 121 b and serves to forward packets (layer 3 packets and layer 2 packets) input via the respective wireless communication interfaces (wireless LAN control circuit 174, wireless WAN control circuit 175 and mobile communication control circuit 176) and the port 220 of the cradle 200 to destination addresses. The transfer processor 121 has a first operation mode, in which only the bridge function 121b performs processing, and a second operation mode, in which both the bridge function module 121b and the router function module 121r perform processing, as available operation modes for packet forwarding. In the first operation mode, only the bridge function module 121 b serves to forward layer 2 frames while the router function module 121r stops operation, so that the portable network connection device 20 (main unit 100) 200 works as the bridge device as a whole. In the second operation mode, on the other hand, both the bridge function module 121b and the router function module 121r perform processing, so that the portable network connection device 20 (main unit 100) works as the router device as a whole.

The transfer controller 122 controls the transfer processor 121. As one of such controls, the transfer controller 122 performs an operation mode changeover process (described later) to set or change the operation mode of the transfer processor 121.

The router detector 123 detects whether any other router is present in the same network, which the portable network connection device 20 (main unit 100) belongs to.

The VRRP controller 124 implements the VRRP protocol. More specifically, the VRRP controller 124 generates a VRRP advertisement message and identifies the presence or the absence of any device forming the same virtual router device, based on the VRID included in a received VRRP advertisement message. The VRRP controller 124 also determines whether the main unit 100 is to serve as a master router or as a backup router, based on the priority included in the received VRRP advertisement message.

The ROM 171 is a flash ROM. The ROM 171 includes a VRRP settings data storage module 171 a, in addition to the programs for the respective functional blocks described above. The VRRP settings data storage module 171a stores various data used for implementing the VRRP protocol. More specifically, the VRRP settings data storage module 171a stores, for example, the priority, the VRID, the advertising interval (i.e., the output interval of the VRRP advertisement message), and the virtual IP address and the virtual MAC address assigned to the virtual router device. In the illustrated example of Fig. 4, the user has stored in advance the priority "1", the VRID "1" and the advertising interval "10" in the VRRP settings data storage module 171 a of the portable network connection device 20 (main unit 100).

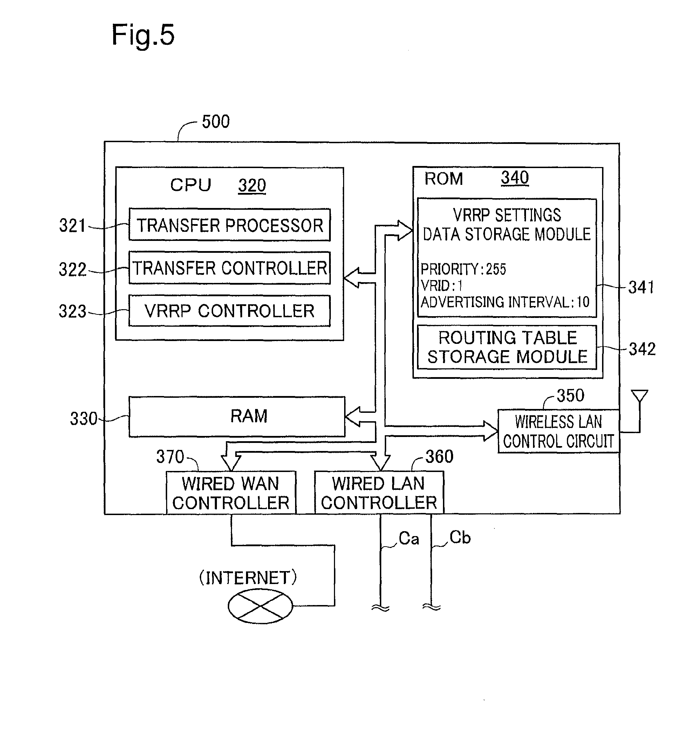

Fig. 5 illustrates the detailed structure of the router 500. The router 500 includes a CPU 320, a RAM 330, a ROM 340, a wireless LAN control circuit 350, a wired LAN controller 360, and a wired WAN controller 370.

The CPU 320 loads and executes computer programs stored in the ROM 340 onto the RAM 330 to serve as a transfer processor 321, a transfer controller 322 and a VRRP controller 324.

The transfer processor 321 forwards an IP packet input via the wired LAN controller 360 or the wireless LAN control circuit 350 to a destination address. The transfer controller 322 controls the transfer processor 321. The VRRP controller 323 is a functional block to implement the VRRP protocol, like the VRRP controller 124 shown in Fig. 4.

The ROM 340 is a flash ROM and is a writable memory. The ROM 340 includes a VRRP settings data storage module 341 and a routing table storage module 342, in addition to the programs for the respective functional blocks described above. The VRRP settings data storage module 341 stores various data used for implementing the VRRP protocol, like the VRRP settings data storage module 171a shown in Fig. 4. In the illustrated example of Fig. 5, the user has stored in advance the priority "255", the VRID "1" and the advertising interval "10" in the VRRP settings data storage module 341 of the router 500. The routing table storage module 342 stores a routing table.

Any priority value that is greater than the priority "1" stored in the portable network connection device 20 (main unit 100) may be set and stored in the VRRP settings data storage module 341 of the router 500. Any priority value that is less than the priority "255" stored in the router 500 may be set and stored in the VRRP settings data storage module 171 a of the portable network connection device 20 (main unit 100). In general, the router 500 connects with an Internet provider via a relatively large bandwidth communication path using, for example, an optical fiber cable. The stationary router 500 generally has an abundance of hardware resources, such as CPU and memories, compared with the portable network connection device 20 (main unit 100). Using not the portable network connection device 20 but the router 500 as the default gateway for communication via the Internet allows the higher-speed communication. When both the router 500 and the portable network connection device 20 (main unit 100) are present in an identical network as in the first connection configuration, there is a demand to use the router preferentially as the device having the router functions. The VRRP protocol sets a device with the highest priority among the devices constituting a virtual router device as a master router, which performs actual routing process. All the other devices with the second highest priority or the lower priority are set as backup routers, which do not perform actual routing process. Setting the higher priority to the router 500 than the priority set to the portable network connection device 20 (main unit 100) accordingly enables the router 500 to serve as the default gateway and allows the higher-speed communication in the first connection configuration.

The wireless LAN control circuit 350 has the similar structure to that of the wireless LAN control circuit 174 of the main unit 100 shown in Fig. 4. A different BSSID from the BSSID of the wireless LAN control circuit 174 is, however, assigned to the wireless LAN control circuit 350. The wired LAN controller 360 has a plurality of ports and is connected with the first client CL1 and the second client CL2 via cables linked with these ports (e.g., network cable Ca and network cable Cb). The wired LAN controller 360 controls data transmission via the port according to a predetermined network protocol (for example, Ethernet (registered trademark)). The wired WAN controller 370 has at least one port and is connected to the Internet via a cable linked to this port.

The transfer processor 121 shown in Fig. 4 corresponds to the packet transfer processor according to the claims. The VRRP controller 124 corresponds to the receiver according to the claims, the packet for the VRRP advertisement message output from the router 500 corresponds to the notice packet according to the claims, and the transfer controller 122 corresponds to the operation mode controller according to the claims.

In the network system 10, the portable network connection device 20 performs the operation mode changeover process described below and sets or changes the operation mode of the portable network connection device 20 to an adequate operation mode, based on whether any other router is present in the same network, which the main unit 100 belongs to.

### A2. Operation Mode Changeover Process

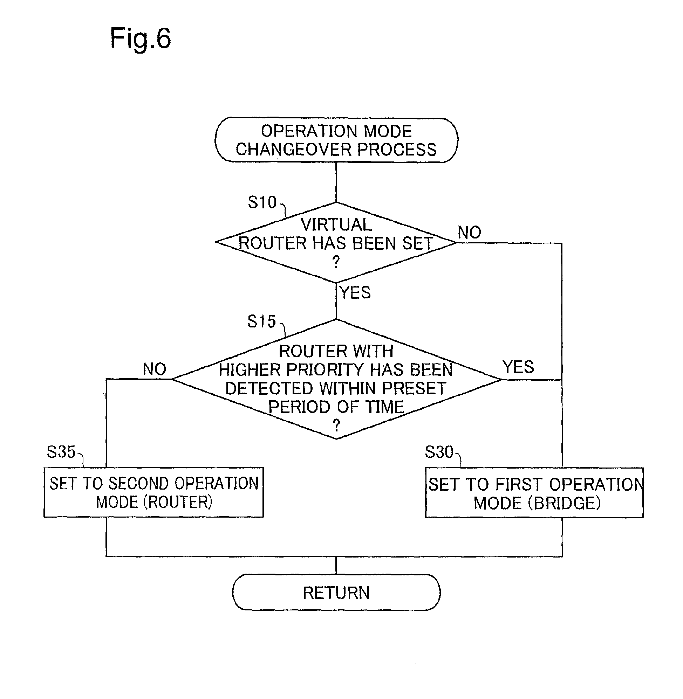

Fig. 6 is a flowchart showing the procedure of operation mode changeover process performed in the portable network connection device 20 according to the first embodiment. In the network system 10 of the first embodiment, the operation mode changeover process is triggered by power-on of the portable network connection device 20. Alternatively the operation mode changeover process may start on completion of another series of processing performed immediately after the start-up of the portable network connection device 20. The operation mode of the portable network connection device 20 (transfer processor 121) is set to the initial setting at the start-up. The initial setting is, for example, the "first operation mode (bridge)" but may be the "second operation mode (router)".

The router detector 123 shown in Fig. 4 first determines whether a virtual router has been set for the main unit 100 (step S10). Such determining may be based on whether the VRRP settings data has been stored in the ROM 171 of the main unit 100.

When it is determined that no virtual router has been set (step S10: No), the transfer controller 122 sets or changes the operation mode of the transfer processor 121 to the first operation mode (step S30).

When it is determined that the virtual router has been set (step S10: Yes), on the other hand, the router detector 123 subsequently determines whether any router with the higher priority has been detected within a preset period of time (i.e., advertising interval) (step S15). When the main unit 100 receives a VRRP advertisement message (packet) within the preset period of time (advertising interval), the router detector 123 reads the priority included in the received VRRP advertising message and compares the priority with the priority set in the portable network connection device 20 (main unit 100). When the priority included in the VRRP advertisement message is higher than the priority set in the main unit 100, the router detector 123 determines that "any router with the higher priority has been detected within the preset period of time". When the priority included in the received VRRP advertisement message is lower than the priority set in the portable network connection device 20 (main unit 100) or when no VRRP advertisement message has been received within the preset period of time, on the other hand, the router detector 123 determines that "no router with the higher priority has been detected within the preset period of time".

When it is determined that any router with the higher priority has been detected within the preset period of time (step S 15: Yes), the transfer controller 122 sets or changes the operation mode of the transfer processor 121 to the first operation mode (bridge) (step S30). Detecting the router with the higher priority indicates the presence of another router device in the same network. According to the embodiment, in this case, the portable network connection device 20 (main unit 100) serves as the bridge device, so as to prevent two router devices from being simultaneously present in the same network. The portable network connection device 20 serving as the bridge device also works as the backup router conforming to the VRRP protocol. The VRRP controller 124 of the main unit 100 accordingly continues the VRRP-based process of generating and outputting the packet for the VRRP advertisement message and receiving the packet for the VRRP advertisement message.

When it is determined that no router with the higher priority has been detected within the preset period of time (step S 15: No), on the other hand, the transfer controller 122 sets or changes the operation mode of the transfer processor 121 to the second operation mode (router) (step S35).

According to this embodiment, the priority set in the portable network connection device 20 (main unit 100) is the lowest value "1", whilst the priority set in the router 500 is the highest value "255". When the router 500 and the portable network connection device 20 are present in the same network (segment) as in the first connection configuration shown in Fig. 1, the priority included in the VRRP advertisement message received from the router 500 is consistently higher than the priority set in the portable network connection device 20 (main unit 100). In the first connection configuration, the operation mode of the portable network connection device 20 is accordingly set to the first operation mode. In the second connection configuration shown in Fig. 2 or in the third connection configuration shown in Fig. 3, on the other hand, no device having the router functions is present in the same network, which the main unit 100 belongs to, so that the main unit 100 does not receive the VRRP advertisement message. The operation mode of the main unit 100 is accordingly set to the second operation mode in the second and the third connection configurations. According to this embodiment, in the absence of any device having the router functions in the same network, which the main unit 100 belongs to, the main unit 100 is made to serve as the router device and thereby enables communication between a client and a device belonging to another network. The portable network connection device 20 (main unit 100) serving as the router device also works as the master router conforming to the VRRP protocol.

As described above, according to the operation mode changeover process performed in the network system 10 of the first embodiment, when there is any router in the same network, which the portable network connection device 20 (main unit 100) belongs to, the portable network connection device 20 (main unit 100) serves as the bridge device. When there is no router in the same network, however, the portable network connection device 20 (main unit 100) serves as the router device. In either cases, the portable network connection device 20 (main unit 100) implements the adequate functions.

Additionally, when there is any other router in the same network, which the portable network connection device 20 (main unit 100) belongs to (i.e., in the first connection configuration), the portable network connection device 20 (main unit 100) serves as the bridge device, so as to advantageously prevent a plurality of router devices (default gateways) from being simultaneously present in the same network. The clients CL1, CL2 and CL3 in the first connection configuration thus identify the router 500 as the gateway for the Internet connection and enable normal data transmission via the Internet.

When there is no other router in the same network, which the portable network connection device 20 (main unit 100) belongs to (i.e., in the second or third connection configuration), the portable network connection device 20 (main unit 100) serves as the router device, so as to advantageously prevent no router device (default gateway) from being present in the same network. The clients CL3 and CL4 in the second connection configuration and the clients CL3 and CL5 in the third connection configuration thus identify the main unit 100 as the gateway for the Internet connection and enable normal data transmission via the Internet. The MAC address and the IP address for the virtual router used by the portable network connection device 20 (main unit) are kept unchanged across the three connection configurations shown in Figs. 1 to 3. The client CL3 connecting with the portable network connection device 20 can continuously use the virtual router, irrespective of a change in connection configuration.

When the user brings back the main unit 100 to the home and reconnects the main unit 100 with the cradle 200 to change from the third connection configuration to the first connection configuration, the portable network connection device 20 (main unit 100) is automatically changed from the second operation mode (router) to the first operation mode (bridge). This enables the operation mode of the portable network connection device 20 to be readily set or changed without any additional operation.

The portable network connection device 20 (main unit 100) identifies the presence of another router in the same network, which the portable network connection device 20 (main unit 100) belongs to, based on reception of the VRRP advertisement message with the setting of the higher priority. This ensures accurate detection of the presence of another router and thereby prevents erroneous change of the operation mode of the transfer processor 121.

Setting the lowest priority "1" in the portable network connection device 20 (main unit 100) advantageously raises the possibility that the main unit 100 serves as the bridge device, when a different router other than the portable network connection device 20 (main unit 100) is newly added to the network NW2 in the second connection configuration or to the network NW3 in the third connection configuration.

### B. Second Embodiment

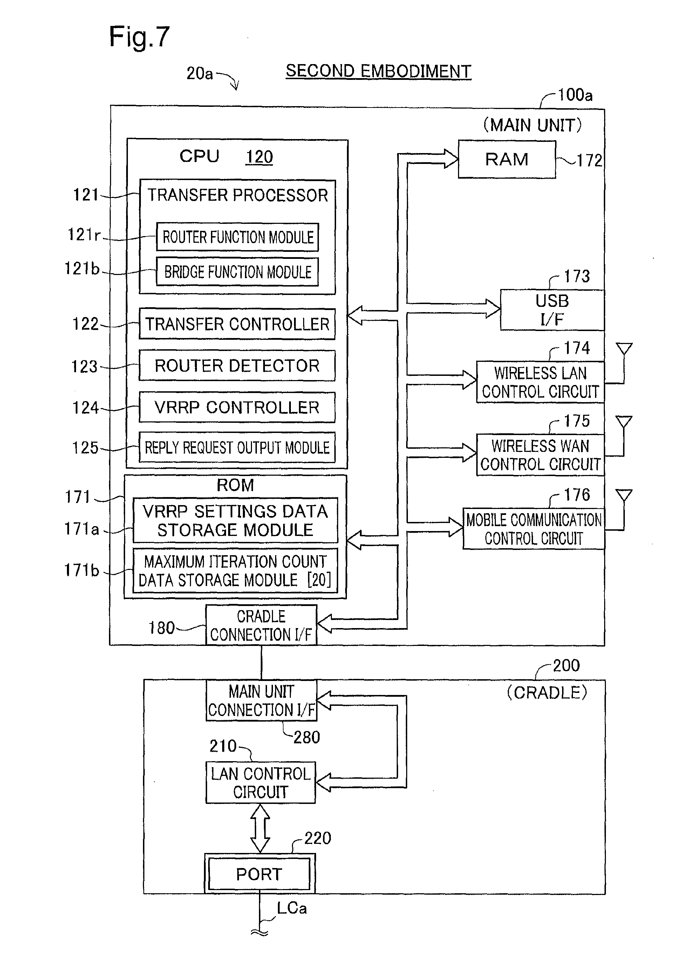

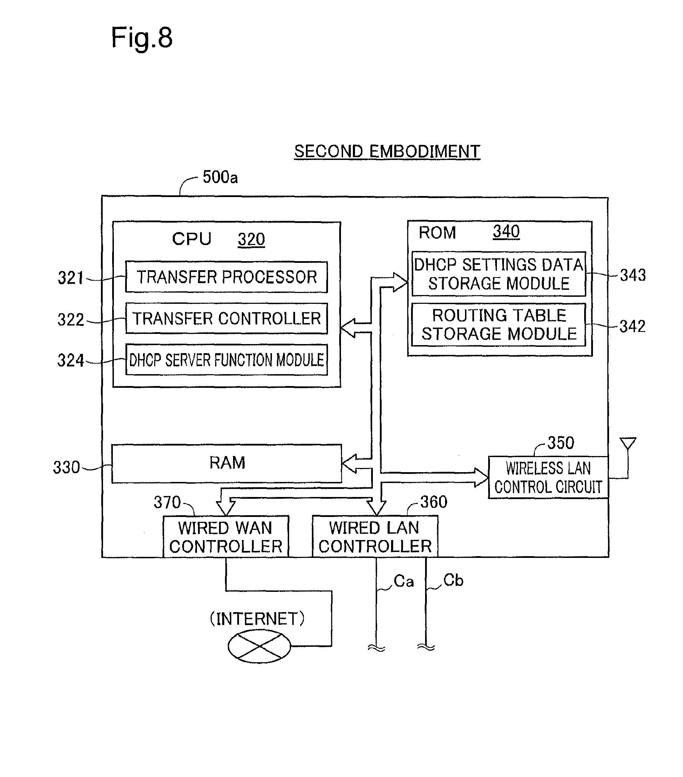

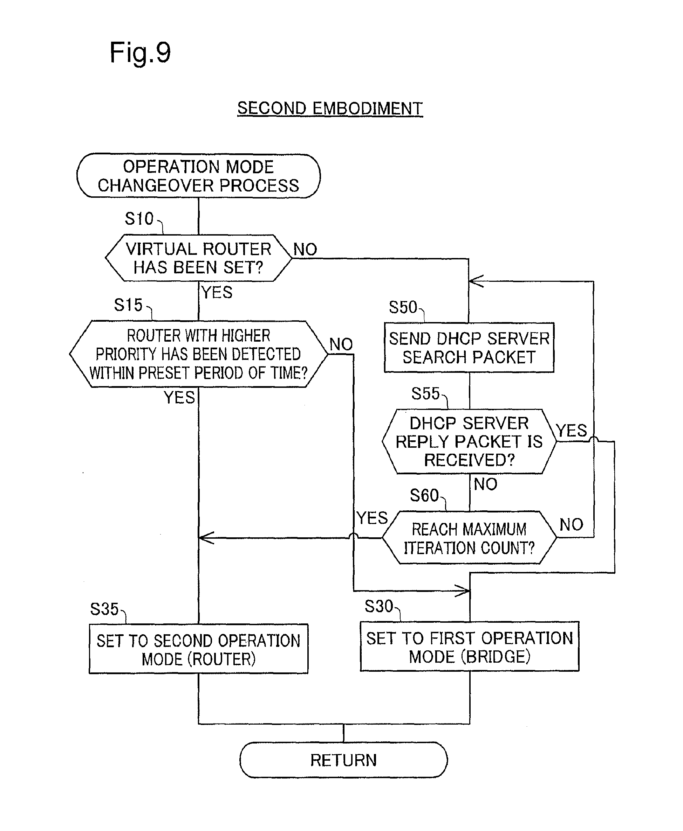

Fig. 7 illustrates the detailed structure of a portable network connection device 20a according to a second embodiment. Fig. 8 illustrates the detailed structure of a router 500a according to the second embodiment. Fig. 9 is a flowchart showing the procedure of operation mode changeover process according to the second embodiment. The differences from the first embodiment are that the network system of the second embodiment identifies the presence or the absence of any other router in the same network, which the portable network connection device (main unit) belongs to, based on the reception or no reception of a DHCP server reply packet, in addition to on the reception or no reception of the packet for the VRRP advertisement message, and that the network system of the second embodiment employs the different structures of the portable network connection device and the router.

As shown in Fig. 7, the portable network connection device 20a of the second embodiment differs from the portable network connection device 20 of the first embodiment shown in Fig. 4 by addition of a reply request output module 125 to the functional blocks 121 to 124 as the functions of the CPU 120 included in a main unit 100a and addition of a maximum iteration count data storage module 171 b provided in the ROM 171, but otherwise has the similar structure to that of the portable network connection device 20. The maximum iteration count data storage module 171 b stores maximum iteration count data described later. According to the second embodiment, a value "20" is stored in advance as the maximum iteration count data in the maximum iteration count data storage module 171 b. The router detector 123 of the second embodiment corresponds to the receiver according to the claims.

As shown in Fig. 8, the router 500a of the second embodiment differs from the router 500 of the first embodiment shown in Fig. 5 by replacement of the VRRP controller 323 with a DHCP (Dynamic Host Configuration Protocol) server function module 324 as the function of the CPU 320 and replacement of the VRRP settings data storage module 341 with a DHCP settings data storage module 343 provided in the ROM 340, but otherwise has the similar structure to that of the router 500. The router 500a of the second embodiment is not compatible with the VRRP but has the DHCP server functions, unlike the router 500 of the first embodiment.

The DHCP server function module 324 serves as the functional block to provide the client with the DHCP services. More specifically, the DHCP server function module 324 specifies an IP address to be assigned to a client, in response to a request for assignment of a new IP address from the client, and notifies the client of the newly assigned IP address, while determining the allowance or rejection of extension, in response to a request for extension of the lease period of an IP address from a client, and notifies the client of the determination result.

The DHCP settings data storage module 343 stores various settings data required for serving as the DHCP server. The settings data may include, for example, data regarding the assignable address range, the MAC address of the IP address assignment destination, and the lease period.

As shown in Fig. 9, the operation mode changeover process of the second embodiment differs by addition of steps S50, S55 and S60 from the operation mode changeover process of the first embodiment shown in Fig. 6, but is otherwise similar to the procedure of the first embodiment. According to the second embodiment, the portable network connection device 20a (main unit 100a) preferably receives assignment of an IP address from the DHCP server function module 324 of the router 500a, prior to the operation mode changeover process.

When it is determined that no virtual router has been set (step S 10: No), the reply request output module 125 of the portable network connection device 20a (main unit 100a) sends a DHCP server search packet (step S50). The DHCP server search packet may be sent, for example, by broadcasting a packet including a DHCPDISCOVER message. Sending the DHCP server search packet at step S50 does not aim to receive actual assignment of an IP address.

The router detector 123 of the portable network connection device 20a (main unit 100a) then determines whether a DHCP server reply packet has been received as the reply packet responding to the DHCP server search packet sent at step S50 (step S55). When receiving the DHCPDISCOVER message, the DHCP server function module 324 of the router 500a sends back a DHCPOFFER message including an IP address as assignment candidate to the source by unicast. Determining the reception or no reception of the DHCP server reply packet accordingly determines whether a packet including this DHCPOFFER message has been received. The DHCPOFFER message notifies the client or the assignment request source of an IP address as assignment candidate and the presence of any device operable as the DHCP server.

When it is determined that the DHCP server reply packet has been received (step S55: Yes), the transfer controller 122 sets or changes the operation mode of the transfer processor 121 to the first operation mode (step S30). The DHCP server is generally implemented by the router, so that the main unit 100a receiving the DHCP server reply packet indicates the presence of another router in the same network, which the main unit 100a belongs to. According to the second embodiment, the operation mode of the portable network connection device 20a (main unit 100a) is accordingly set or changed to the operation mode serving as the bridge device, when the DHCP server reply packet is received.

When it is determined that the DHCP server reply packet has not been received (step S55: No), on the other hand, the router detector 123 reads out the maximum iteration count data from the maximum iteration count data storage module 171b and determines whether the number of processing cycles of steps S50 and S55 has reached a preset maximum iteration count (step S60). The preset maximum iteration count means the number of times specified by the maximum iteration count data stored in the maximum iteration count data storage module 171 shown in Fig. 7.

When it is determined that the number of processing cycles has not yet reached the preset maximum iteration count (step S60: No), the processing flow repeats the processing of steps S50 and S55 to send the DHCP server search packet and determine the reception or no reception of the DHCP server reply packet. The transmission of the DHCP server search packet and the determination of the reception or no reception of the DHCP server reply packet are repeated until the number of processing cycles reaches the preset maximum iteration count, because of the following reason. For example, the DHCP server search packet or the DHCP server reply packet may be lost, due to a failure or trouble arising in the network. With recovery from the failure or trouble in the network, however, repeatedly sending the DHCP server search packet may lead to successful reception of the DHCP server reply packet.

When it is determined that the number of processing cycles has reached the preset maximum iteration count (step S60: Yes), on the other hand, the transfer controller 122 sets or changes the operation mode of the transfer processor 121 to the second operation mode (router) (step S35). Since the value "20" is set to the maximum iteration count in this embodiment as explained above, the operation mode of the transfer processor 121 is changed to the second operation mode after transmission of the DHCP server search packet 20 times. Failed reception of the DHCP server reply packet despite of repeated transmission of the DHCP server search packet to the maximum iteration count indicates the high probability that no router as the DHCP server is present in the same network. According to this embodiment, in this case, the portable network connection device 20a (main unit 100a) is made to serve as the router device.

The processing flow (steps S15, S30 and S35) when it is determined that the virtual router has been set (step S10: Yes) is identical with that of the first embodiment. The processing flow of steps S 10 and S 15 remains in the operation mode changeover process of the second embodiment, because of the following reasons. This enables the operation mode of the main unit 100a (transfer processor 121) to be set to or changed to the adequate mode, in the case of replacement of the router 500a with the router 500 of the first embodiment, due to some trouble or failure. This also enables the presence of the router 500a to be identified with higher accuracy when the router 500a of the second embodiment becomes VRRP-compatible due to, for example, updating the firmware.

The network system according to the second embodiment described above has the similar advantageous effects to those of the network system 10 according to the first embodiment. Additionally, according to the second embodiment, the portable network connection device 20a (main unit 100a) sends the DHCP server search packet and identifies the presence or the absence of any other router in the same network, which the portable network connection device 20a belongs to, based on the reception or no reception of the DHCP server reply packet responding to the DHCP server search packet. The network system of the second embodiment does not wait for autonomous output of a message (packet) representing the own presence from another router but urges another router to output the message (packet) representing the own presence. This advantageously enables the presence or the absence of another router in the same network, which the portable network connection device 20a (main unit 100a) belongs to, to be identified within a short period of time.

### C. Third Embodiment

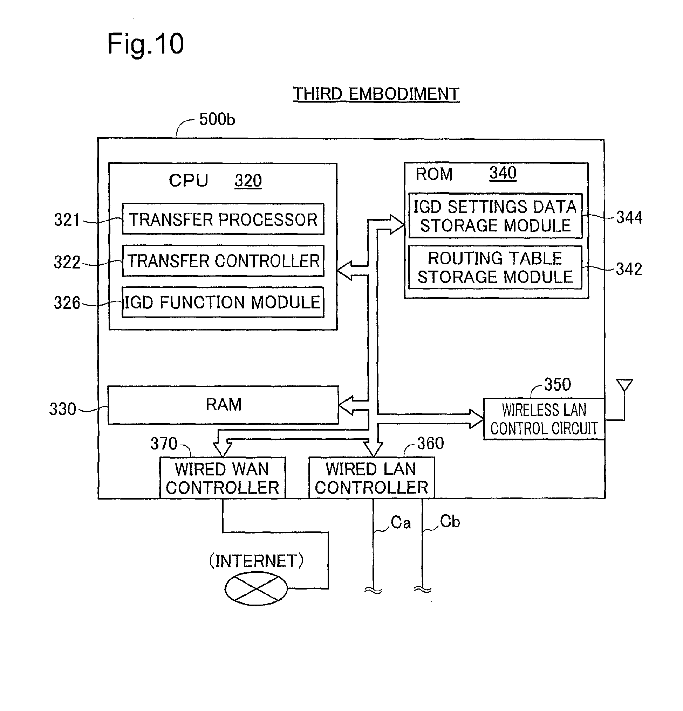

Fig. 10 illustrates the detailed structure of a router 500b according to a third embodiment. The router 500b of the third embodiment differs from the router 500a of the second embodiment shown in Fig. 8 by replacement of the DHCP server function module 324 with an IDG function module 326 as the function of the CPU 320 and replacement of the DHCP settings data storage module 343 with an IGD settings data storage module 344 provided in the ROM 340, but otherwise has the similar structure to that of the router 500a. The portable network connection device of the third embodiment has the same structure as that of the second embodiment shown in Fig. 7.

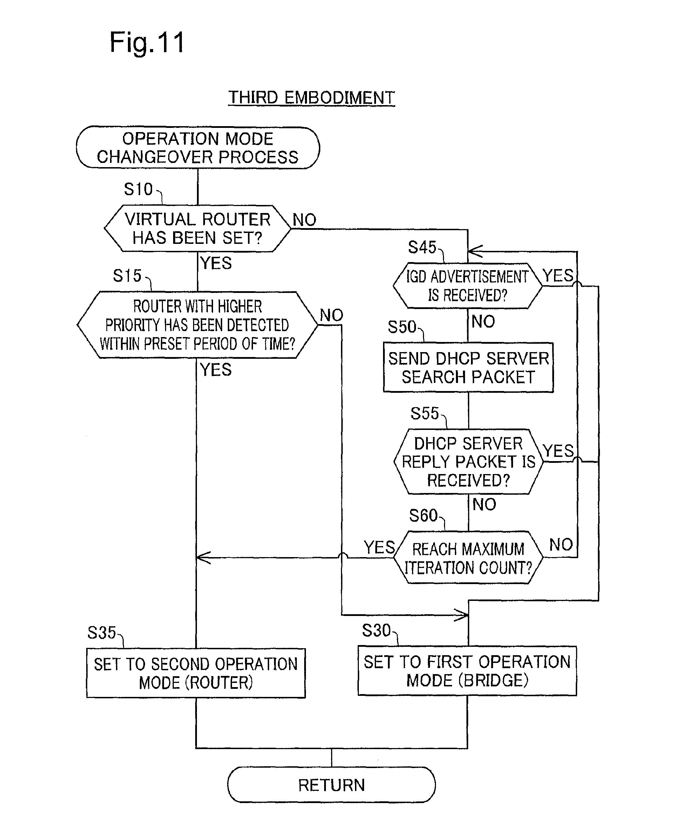

Fig. 11 is a flowchart showing the procedure of operation mode changeover process according to the third embodiment. In the network system of the third embodiment, the router 500b is compatible with UPnP (Universal Plug and Play) and may serve as an IGD (Internet Gateway Device). Another difference from the second embodiment is that the network system of the third embodiment identifies the presence or the absence of any other router in the same network, which the portable network connection device (main unit) belongs to, based on the reception or no reception of IGD advertisement conforming to the UPnP protocol, in addition to on the reception or no reception of the DHCP server reply packet and on the reception or no reception of the packet for the VRRP advertisement message. The IGD advertisement is a message to notify a UPnP client (e.g., personal computer) of the presence of a device serving as the IGD conforming to the UPnP protocol and is sent and received according to SSDP (Simple Service Discovery Protocol).

As shown in Fig. 11, when it is determined that no virtual router has been set (step S10: No), the router detector 123 of the portable network connection device 20a (main unit 100a) determines whether IGD advertisement (packet including an IGD advertisement message) has been received (step S45). According to this embodiment, the router sends the IGD advertisement at preset intervals. When it is determined that the IGD advertisement has been received (step S45: Yes), the processing flow goes to step S30, at which the transfer controller 122 sets or changes the operation mode of the transfer processor 121 to the first operation mode (bridge). Receiving the IGD advertisement indicates the presence of another router in the same network, which the main unit 100a belongs to. According to the third embodiment, the portable network connection device 20a (main unit 100a) is accordingly made to serve as the bridge device, when the IGD advertisement is received.

When it is determined that the IGD advertisement has not been received (step S45: No), the processing flow goes through steps S50 to S60 as described above with reference to Fig. 9. When neither the IGD advertisement nor the DHCP server reply packet has been received until the number of processing cycles reaches the maximum iteration count, the processing flow goes to step S35, at which the transfer controller 122 sets or changes the operation mode of the transfer processor 121 to the second operation mode (router).

According to the procedure of Fig. 11, the processing flow (steps S15, S30 and S35) when it is determined that the virtual router has been set (step S10: Yes) is identical with that of the second embodiment. The processing flow (steps S50 to S60, S30 and S35) when it is determined that no virtual router has been set (step S10: No) and that the IGD advertisement has not been received (step S45: No) is also identical with that of the second embodiment. These processing flows remain in the operation mode changeover process of the third embodiment, because of the following reasons. This enables the operation mode of the main unit 100a (transfer processor 121) to be set to or changed to the adequate mode, in the case of replacement of the router 500b with the router 500 of the first embodiment or the router 500a of the second embodiment, due to some trouble or failure. This also enables the presence of the router 500b to be identified with higher accuracy when the router 500b of the third embodiment becomes VRRP-compatible or DHCP-compatible due to, for example, updating the firmware.

The network system according to the third embodiment described above has the similar advantageous effects to those of the network system 10 according to the first embodiment and the network system according to the second embodiment. Additionally, the network system of the third embodiment identifies the presence of another router in the same network, which the portable network connection device 20a (main unit 100a) belongs to, by receiving the IGD advertisement. This ensures accurate detection of the presence of a UPnP-compatible server working as the IGD. The router detector 123 of the third embodiment corresponds to the receiver according to the claims.

### D. Fourth Embodiment

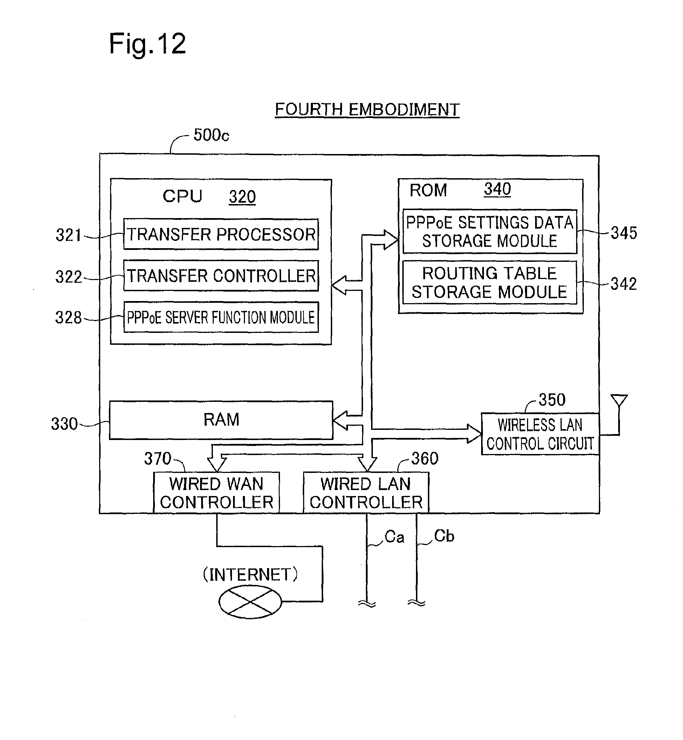

Fig. 12 illustrates the detailed structure of a router 500c according to a fourth embodiment. The router 500c of the fourth embodiment differs from the router 500a of the second embodiment shown in Fig. 8 by replacement of the DHCP server function module 324 with a PPPoE server function module 328 as the function of the CPU 320 and replacement of the DHCP settings data storage module 343 with a PPPoE settings data storage module 345 provided in the ROM 340, but otherwise has the similar structure to that of the router 500a. The portable network connection device of the fourth embodiment has the same structure as that of the second embodiment shown in Fig. 7.

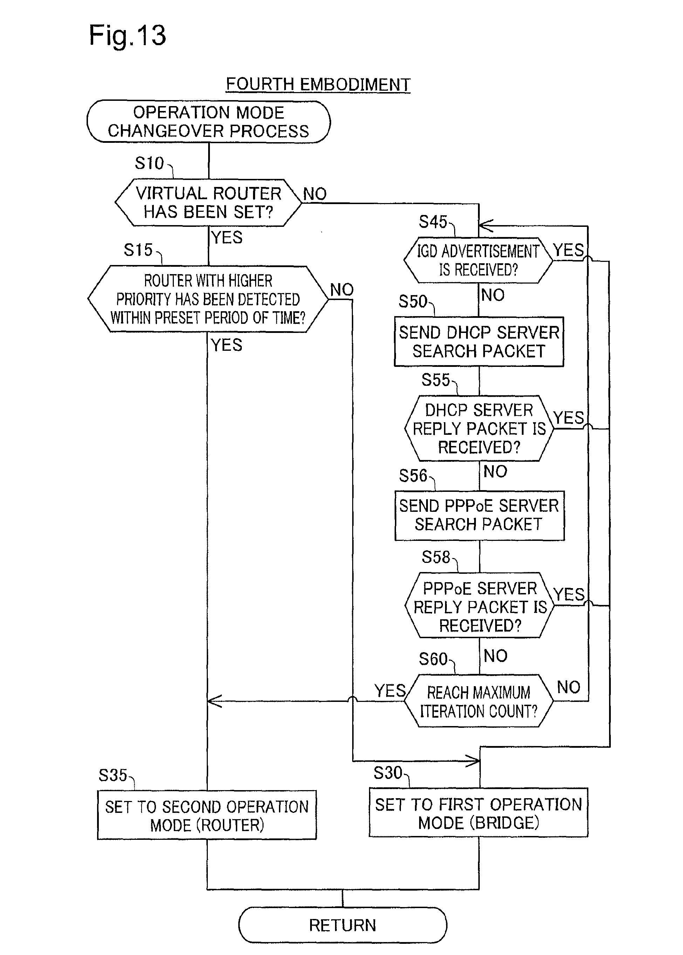

Fig. 13 is a flowchart showing the procedure of operation mode changeover process according to the fourth embodiment. In the network system of the fourth embodiment, the router 500c may serve as a PPPoE (PPP over Ethernet (registered trademark)) server. Another difference from the third embodiment is that the network system of the fourth embodiment identifies the presence or the absence of any other router in the same network, which the portable network connection device (main unit) belongs to, based on the reception or no reception of a PPPoE server reply packet, in addition to on the reception or no reception of the DHCP server reply packet, on the reception or no reception of the packet for the VRRP advertisement message, and on the reception or no reception of IGD advertisement conforming to the UPnP protocol.

According to the fourth embodiment, the portable network connection device 20a (main unit 100a) may serve as a PPPoE client, and the router 500c has "non-pass-through" setting. The "non-pass-through" setting of the router 500c means that the router 500c does not forward any layer 2 frame. In the "pass-through" setting, a packet for searching for PPPoE server output from a client is not terminated (received) at the router but is terminated at a PPPoE server provided by, for example, an Internet provider. The router 500c of the fourth embodiment, however, has the "non-pass-through" setting, so that the packet for searching for PPPoE server is terminated at the router 500c.

When it is determined that the DHCP server reply packet has not been received (step S55: No) as described in the third embodiment, the reply request output module 125 of the portable network connection device 20a (main unit 100a) sends a PPPoE server search packet (step S56). The PPPoE server search packet may be sent, for example, by broadcasting a PADI (PPPoE Active Discovery Initiation) packet specified by the PPPoE protocol.

The router detector 123 of the portable network connection device 20a (main unit 100a) then determines whether a PPPoE server reply packet has been received as the reply packet responding to the PPPoE server search packet sent at step S56 (step S58). The router 500c of the fourth embodiment may work as the PPPoE server and sends back a PADO (PPPoE Active Discovery Offer) packet when receiving the PADI packet. Determining the reception or no reception of the PPPoE server reply packet accordingly determines whether this PADO packet has been received. The PADO packet is a message to notify the client of the presence of a device operable as the PPPoE server.

When it is determined that the DHCP server reply packet has been received (step S58: Yes), the transfer controller 122 sets or changes the operation mode of the transfer processor 121 to the first operation mode (step S30). Receiving the PADO packet indicates the presence of another router in the same network, which the main unit 100a belongs to. According to the fourth embodiment, the portable network connection device 20a (main unit 100a) is accordingly made to serve as the bridge device, when the PPPoE server reply packet is received.

When it is determined that the DHCP server reply packet has not been received (step S58: No), on the other hand, the processing flow goes to step S60 described above. When none of the IGD advertisement, the DHCP server reply packet or the PPPoE server reply packet has been received until the number of processing cycles reaches the maximum iteration count, the processing flow goes to step S35, at which the transfer controller 122 sets or changes the operation mode of the transfer processor 121 to the second operation mode (router).

The processing flow (steps S15, S30 and S35) when it is determined that the virtual router has been set (step S10: Yes), the processing with respect to the IGD advertisement (step S45), the processing with respect to the search for DHCP server (steps S50 and S55) and the determination whether the number of processing cycles has reached the maximum iteration count (step S60) remain in the operation mode changeover process of the fourth embodiment, because of the following reasons. This enables the operation mode of the main unit 100a (transfer processor 121) to be set to or changed to the adequate mode, in the case of replacement of the router 500c with the router 500 of the first embodiment, the router 500a of the second embodiment or the router 500b of the third embodiment, due to some trouble or failure. This also enables the presence of the router 500c to be identified with higher accuracy when the router 500c of the fourth embodiment becomes VRRP-compatible, DHCP-compatible or IGD-compatible due to, for example, updating the firmware.

The network system according to the fourth embodiment described above has the similar advantageous effects to those of the network systems according to the first to the third embodiments. Additionally, the network system of the fourth embodiment identifies the presence or the absence of another router in the same network, which the portable network connection device 20a (main unit 100a) belongs to, by receiving the PPPoE server reply packet. This ensures accurate detection of the presence of a PPPoE-compatible router working as the PPPoE server.

Furthermore, according to the fourth embodiment, the portable network connection device 20a (main unit 100a) sends the PPPoE server search packet and identifies the presence or the absence of any other router in the same network, which the portable network connection device 20a belongs to, based on the reception or no reception of the PPPoE server reply packet responding to the PPPoE server search packet. The network system of the fourth embodiment does not wait for autonomous output of a message (packet) representing the own presence from another router but urges another router to output the message (packet) representing the own presence. This advantageously enables the presence or the absence of another router in the same network, which the portable network connection device 20a (main unit 100a) belongs to, to be identified within a short period of time. The router detector 123 of the fourth embodiment corresponds to the receiver according to the claims.

### E. Modifications

The disclosure is not limited to the above embodiments or their applications, but a multiplicity of variations and modifications may be made to the embodiments without departing from the scope of the invention, which is defined by the appended claims. Some examples of possible modification are given below.

### E1. Modification 1

The first embodiment uses the VRRP protocol as the protocol for forming the virtual router device by the router 500 and the portable network connection device 20 (main unit 100), but another protocol for forming the virtual router device may be adopted for the same purpose; for example, HSRP (Hot Standby Router Protocol) implemented on routers manufactured by Cisco Systems Inc. or CARP (Common Address Redundancy Protocol).

### E2. Modification 2

The operation mode changeover process of the first embodiment determines whether any other router with the higher priority has been detected within the preset period of time (step S 15) and sets or changes the operation mode based on the result of determination; but the disclosure is not limited to this embodiment. In the first embodiment, the lowest priority "1" in the available priority range of 1 to 255 is set as the VRRP priority in the portable network connection device 20 (main unit 100), while the highest priority "255" is set in the router 500. In this application, the portable network connection device 20 (main unit 100) receiving the packet for the VRRP advertisement message indicates the presence of another router with the higher priority. A modified procedure may accordingly determine whether the packet for the VRRP advertisement message has been received without comparison of the priority at step S15 and may set or change the operation mode based on the result of determination.

### E3. Modification 3

The operation mode changeover process of the fourth embodiment identifies the presence or the absence of another router in the same network, which the portable network connection device (main unit) belongs to, based on the reception or no reception of the packet for the VRRP advertisement message, on the reception or no reception of the DHCP server reply packet, , on the reception or no reception of IGD advertisement conforming to the UPnP protocol, and on the reception or no reception of the PPPoE server reply packet. Part of such determinations may be omitted as needed. For example, the determination of whether the packet for the VRRP advertisement message has been received may be omitted. The portable network connection device is preferably configured to perform a plurality of different types of determinations including at least two of the following four different types of determinations: (i) first determination of whether the VRRP advertisement message is received; (ii) second determination of whether the IGD advertisement message conforming to the UPnP protocol is received; (iii) third determination of whether the DHCP server reply packet is received; and (iv) fourth determination of whether the PPPoE server reply packet is received, and to set the operation mode of the portable network connection device to the first operation mode when reception is confirmed in at least one determination among the plurality of different types of determinations.

### E4. Modification 4

The operation mode changeover process determines whether the number of processing cycles has reached the preset maximum iteration count (step S60) according to the second to the fourth embodiments, but this step may be omitted. According to another embodiment, the determination of whether the number of processing cycles has reached the maximum iteration count may be replaced with determination of whether a preset period of time has elapsed. More specifically, the operation mode changeover process of the second embodiment may measure the time elapsed since the first cycle of step S50 and repeat the processing of steps S50 and S55 until the preset period of time has elapsed.

### E5. Modification 5

When the portable network connection device 20 (main unit 100) serves as the bridge device as in the first connection configuration, the portable network connection device 20 (main unit 100) may work as a WDS (Wireless Distribution System) to interconnect a plurality of wireless LAN access points. In this application, the portable network connection device 20 (main unit 100) may be used for data transmission between the plurality of wireless LAN access points.

### E6. Modification 6

The network system 10 mainly includes the router 500, the portable network connection device 20 and the clients CL1 to CL5 according to the above embodiments, but the disclosure is not limited to these embodiments. For example, the network system may include only the portable network connection device 20. In other words, the disclosure is not limited to the application of the network system 10 but is also applicable to the portable network connection device 20.

### E7. Modification 7

The second embodiment uses the packet including the DHCPDISCOVER message as the DHCP server search packet, but may alternatively use a packet including a DHCPREQUEST message. In this application, a packet including a DHCPACK message may be used, instead of the packet including the DHCPOFFER message, as the DHCP server reply packet.

### E8. Modification 8

The operation mode is changeable bi-directionally, i.e., from the first operation mode to the second operation mode or from the second operation mode to the first operation mode, based on various conditions (e.g., the detection or no detection of any router with the higher priority, the reception or no reception of the IGD advertisement) according to the above embodiments, but the disclosure is not limited to these embodiments. According to another embodiment, the operation mode changeover process may allow only changing the operation mode in one direction, i.e., from the second operation mode to the first operation mode but may not automatically allow changing the operation mode in the reverse direction, i.e., from the first operation mode to the second operation mode. In this application, the user may perform a specific operation to manually change the operation mode and make the main unit 100 serve as the router (i.e., set the operation mode of the transfer processor 121 to the second operation mode), when taking out the main unit 100 from the network NW1. According to another embodiment, the operation mode changeover process may allow only changing the operation mode in one direction, i.e., from the first operation mode to the second operation mode but may not automatically allow changing the operation mode in the reverse direction, i.e., from the second operation mode to the first operation mode. In this application, the user may perform a specific operation to manually change the operation mode and make the main unit 100 serve as the bridge (i.e., set the operation mode of the transfer processor 121 to the first operation mode), when reconnecting the main unit 100 to a home network including the router 500.

### E9. Modification 9

The structure of the portable network connection device 20 described in the above embodiments is only illustrative and may be changed, altered and modified in various ways. For example, the cradle connection interface 180 of the main unit 100 and the main unit connection interface 280 of the cradle 200 transmit information in conformity to the USB standards according to the above embodiments, but information may be transmitted between the main unit 100 and the cradle 200 in conformity with any standards other than the USB standards. The main unit 100 and the cradle 200 of the portable network connection device 20 are provided as separate constituents according to the above embodiments, but the portable network connection device 20 may be provided as an integrated structure according to another embodiment.

According to another embodiment, the wireless LAN control circuit 174 and the wireless WAN control circuit 175 may be constructed as wireless communication interfaces configured to make wireless communication by the wireless LAN conforming to the IEEE802.11a/b/g/n standard, as well as any future available wireless LAN. The mobile communication control circuit 176 may be constructed as a wireless communication interface configured to make wireless communication by mobile communication conforming to the 3G/HSPA protocol, as well as any future available mobile communication, such as LTE, newt-generation mobile WiMAX (IEEE802.16m) or next-generation PHS (XGP: eXtended Global Platform).

The main unit 100 of the portable network connection device 20 includes the three different types of wireless communication interfaces, i.e., wireless LAN control circuit 174, wireless WAN control circuit 175 and mobile communication control circuit 176 according to the above embodiments, but may include only one or two of these three different types of wireless communication interfaces or may include four or more different types of wireless communication interfaces according to other embodiments. The main unit 100 may include a plurality of the same type of wireless communication interfaces. The disclosure is not limited to the wireless LAN or mobile communication but is generally applicable to wireless communication in any suitable wireless communication network. The number of constituents included in the network system 10 is not limited to the number described in any of the above embodiments and its modifications. For example, the network system may include any number of portable network connection devices.

According to another embodiment, part of the hardware configuration may be replaced by the software configuration, and, in an opposite manner, part of the software configuration may be replaced by the hardware configuration. When part or all of the functions according to the disclosure is implemented by the software configuration, the software (computer programs) may be provided in the form of storage in a computer readable storage medium. The "computer readable storage medium" herein is not limited to portable storage media, such as flexible disks and CD-ROMs but includes internal storage devices, such as various RAMs and ROMs, incorporated in the computer and external storage devices, such as hard drive, attached to the computer. The term "computer readable storage medium" is accordingly used in the wider sense to represent any non-transitory storage medium.

### F. Other Aspects

According to an aspect of a portable network connection device, the portable network connection device capable of connecting with a router is provided. According to one aspect of the present invention, the portable network connection device comprises a packet transfer processor that works as a bridge in a first operation mode and as a router in a second operation mode; a receiver that receives a notice packet that indicates a presence of a router; and an operation mode controller that sets a operation mode of the packet transfer to the first operation mode when the receiver receives the notice packet.

Preferably, when the notice packet that indicates of the presence of a router is received, the portable network connection device according to this aspect sets the operation mode of the packet transfer to the first operation mode, so as to make the packet transfer serve as the bridge. This enables the portable network connection device to implement the adequate functions when a router is present in the same network, which the portable network connection device belongs to. In this configuration, making the portable network connection device serve as the bridge (bridge device) advantageously prevents a plurality of devices having the router functions from being simultaneously present in the same network and thereby ensures normal data transmission via the network. Changing the operation mode of the packet transfer in response to reception of the notice packet enables the operation mode to be readily changed without requiring the user's any additional operation. Changing the operation mode of the packet transfer in response to reception of the notice packet ensures the changeover of the operation mode in the presence of a router. This effectively prevents erroneous change of the operation mode. The term "packet" herein is not limited to a layer 3 packet, but is used in the wider sense including a collection of data as a processing unit on any layer, such as a layer 2 frame.

According to another preferable feature of a portable network connection device, the operation mode controller sets the operation mode of the packet transfer to the second operation mode, when the receiver does not receive the notice packet. When the notice packet that indicates of a presence of a router is not received, the portable network connection device sets the operation mode of the packet transfer processor to the second operation mode, so as to make the packet transfer processor serve as the router function module. This enables the portable network connection device to implement the adequate functions when a router is not present in the same network, which the portable network connection device belongs to. In this configuration, a client in the same network, which the portable network connection device belongs to, identifies the portable network connection device as the gateway device for sending data to a different network from the network, which the client belongs to, so as to ensure normal data transmission to the different network. Changing the operation mode of the packet transfer in response to non-reception of the notice packet enables the operation mode to be readily changed without requiring the user's any additional operation. Changing the operation mode of the packet transfer in response to non-reception of the notice packet ensures the changeover of the operation mode in the absence of a router. This effectively prevents erroneous change of the operation mode. The term "packet" herein is not limited to layer 3 packet, but is used in the wider sense including a collection of data as a processing unit on any layer, such as layer 2 frame.

According to another preferable feature of a portable network connection device, the portable network connection device further comprises a sender that sends an output request packet to a router, wherein the output request packet is used for requesting output of the notice packet. The portable network connection device according to this embodiment does not wait for autonomous output of the notice packet from a router but urges a router to output the notice packet, thus enabling the presence or the absence of a router to be identified within a short period of time, based on reception or no reception of the notice packet.

According to another preferable feature of a portable network connection device, the portable network connection device is operable as a virtual router conforming to VRRP (Virtual Router Redundancy Protocol), and the notice packet includes a packet representing a VRRP advertisement message. The portable network connection device according to this embodiment ensures accurate detection of the presence or the absence of a router working as a VRRP virtual router. Additionally, the notice packet includes the packet representing the VRRP advertisement message, so that the functional module of implementing the VRRP functions and receiving the packet representing the VRRP advertisement message can be used as the receiver of the portable network connection device. This does not require providing another functional module of receiving the notice packet separately from the functional module of receiving the packet representing the VRRP advertisement message, thus advantageously reducing the manufacturing cost of the portable network connection device.

According to another preferable feature of a portable network connection device, the notice packet includes a packet representing an IGD (Internet Gateway Device) advertisement message conforming to UPnP (Universal Plug and Play) protocol. The portable network connection device according to this embodiment ensures accurate detection of the presence or the absence of a router working as an IGD (Internet Gateway Device) conforming to the UPnP (Universal Plug and Play) protocol. Additionally, the notice packet includes the packet representing the IGD advertisement message, so that the functional module of implementing the UPnP functions and receiving the packet representing the IGD advertisement message can be used as the receiver of the portable network connection device. This does not require providing another functional module of receiving the notice packet separately from the functional module of receiving the packet representing the IGD advertisement message, thus advantageously reducing the manufacturing cost of the portable network connection device.

According to another preferable feature of a portable network connection device, the output request packet includes a packet for searching for DHCP (Dynamic Host Configuration Protocol) server, and the notice packet includes a DHCP server reply packet conforming to DHCP protocol. The portable network connection device according to this embodiment ensures accurate detection of the presence or the absence of a router working as a DHCP (Dynamic Host Configuration Protocol) server. Additionally, the notice packet includes the packet representing the DHCP server reply message, so that the functional module of implementing the DHCP functions and receiving the packet representing the DHCP server reply message can be used as the receiver of the portable network connection device. This does not require providing another functional module of receiving the notice packet separately from the functional module of receiving the packet representing the DHCP server reply message, thus advantageously reducing the manufacturing cost of the portable network connection device. The output request packet may be, for example, a packet including a DHCPDISCOVER message or a packet including a DHCPREQUEST message. The notice packet may be, for example, a packet including a DHCPOFFER message or a packet including a DHCPACK message.

According to another preferable feature of a portable network connection device, the output request packet includes a packet for searching for PPPoE (PPP over Ethernet (registered trademark)) server, and the notice packet includes a PPPoE server reply packet conforming to PPPoE protocol. The portable network connection device according to this embodiment ensures accurate detection of the presence or the absence of a router working as a PPPoE (PPP over Ethernet (registered trademark)) server. Additionally, the notice packet includes the packet representing the PPPoE server reply message, so that the functional module of implementing the PPPoE functions and receiving the packet representing the PPPoE server reply message can be used as the receiver of the portable network connection device. This does not require providing another functional module of receiving the notice packet separately from the functional module of receiving the packet representing the PPPoE server reply message, thus advantageously reducing the manufacturing cost of the portable network connection device. The output request packet may be, for example, a PADI packet. The notice packet may be, for example, a PADO packet.

According to another preferable feature of a portable network connection device, the operation mode controller executes a plurality of different types of determinations including at least two of four different types of determinations: (i) first determination of whether a VRRP advertisement message is received as the notice packet; (ii) second determination of whether an IGD advertisement message conforming to UPnP protocol is received as the notice packet; (iii) third determination of whether a DHCP server reply packet is received as the notice packet; and (iv) fourth determination of whether a PPPoE server reply packet is received as the notice packet, and the operation mode controller sets the operation mode of the packet transfer to the first operation mode, when reception of the notice packet is confirmed in at least one determination among the plurality of different types of determinations. The portable network connection device according to this embodiment preferably sets the operation mode of the portable network connection device to the first operation mode when reception of the notice packet is confirmed in at least one of the plurality of different types of determinations. This allows detection of the presence of a router implementing any of the different types of router functions, thus ensuring adequate setting of the operation mode of the portable network connection device with higher accuracy.

The present disclosure may be implemented by a variety of other aspects and applications, for example, a system including the portable network connection device, methods of controlling the portable network connection device and the system, computer programs to enable the functions of any of these methods, the device and the system, and non-transitory computer readable storage media in which such computer programs are stored.

## Claims

1. A portable network connection device (20;20a), comprising:
a transfer processor (121) configured to function as a bridge in a first operation mode and as a router in a second operation mode;
a receiver (124) configured to receive a notice packet indicating a presence of a router; and
a transfer controller (122) arranged to determine whether the notice packet is received at the receiver, and arranged to set an operation mode of the transfer processor to the first operation mode or the second operation mode based on the determination.

2. The portable network connection device of claim 1, wherein
the transfer controller (122) is arranged to set the operation mode of the transfer processor to the first operation mode when it is determined that the notice packet is received at the receiver.

3. The portable network connection device according to claim 1 or 2, wherein
the transfer controller (122) is arranged to set the operation mode of the transfer processor to the second operation mode when it is determined that the notice packet is not received at the receiver.

4. The portable network connection device according to any one of claim 1 through 3, further comprising:
a transmitter arranged to transmit a request packet to a router, wherein the request packet requests output of the notice packet from the router.

5. The portable network connection device according to any one of claim 1 through 4, wherein
the portable network connection device (20;20a) is operable as a virtual router conforming to VRRP (Virtual Router Redundancy Protocol), and
the notice packet includes a packet representing a VRRP advertisement message.

6. The portable network connection device according to any one of claims 1 through 5, wherein
the notice packet includes a packet representing an IGD (Internet Gateway Device) advertisement message conforming to UPnP (Universal Plug and Play) protocol.

7. The portable network connection device according to claim 4, wherein the request packet includes a packet for searching for a DHCP (Dynamic Host Configuration Protocol) server, and
the notice packet includes a DHCP server reply packet conforming to DHCP protocol.

8. The portable network connection device according to claim 4, wherein the request packet includes a packet for searching for a PPPoE (PPP over Ethernet (registered trademark)) server, and
the notice packet includes a PPPoE server reply packet conforming to PPPoE protocol.

9. The portable network connection device according to claim 4, wherein the transfer controller (124) is arranged to execute a plurality of different types of determinations including at least two of four different types of determinations:
(i) first determination of whether a VRRP advertisement message is received as the notice packet;
(ii) second determination of whether an IGD advertisement message conforming to UPnP protocol is received as the notice packet;
(iii) third determination of whether a DHCP server reply packet is received as the notice packet; and
(iv) fourth determination of whether a PPPoE server reply packet is received as the notice packet, and
the transfer controller (122) is arranged to set the operation mode of the transfer processor (121) to the first operation mode, when reception of the notice packet is confirmed in at least one determination among the plurality of different types of determinations.

10. A method of setting an operation mode for packet forwarding in a portable network connection device (20;20a) that functions a bridge in a first operation mode and as a router in a second operation mode, the method comprising:
determining whether a notice packet indicating a presence of a router is received at the portable network connection device; and
setting the operation mode of the portable network connection device to the first operation mode or the second operation mode based on the determination.

11. The method according to claim 10, wherein
the setting includes setting the operation mode of the portable network connection device (20;20a) to the first operation mode when it is determined that the notice packet is received.

12. The method according to claim 10, wherein
the setting includes setting the operation mode of the portable network connection device (20;20a) to the second operation mode when it is determined that the notice packet is not received.

13. A non-transitory computer readable storage medium having computer readable instructions stored therein, which when executed by a portable network connection device (20;20a) that functions a bridge in a first operation mode and as a router in a second operation mode, cause the portable network connection device to perform a method comprising:
determining whether a notice packet indicating a presence of a router is received at the portable network connection device; and
setting the operation mode of the portable network connection device to the first operation mode or the second operation mode based on the determination.

14. The non-transitory computer readable storage medium according to claim 13, wherein
the setting includes setting the operation mode of the portable network connection device (20;20a) to the first operation mode when it is determined that the notice packet is received.

15. The non-transitory computer readable storage medium according to claim 13 or 14, wherein
the setting includes setting the operation mode of the portable network connection device (20;20a) to the second operation mode when it is determined that the notice packet is not received.
